# EUROPÄISCHE PATENTSCHRIFT

(11) **EP 3 741 547 B1**
(45) Veröffentlichungstag und Bekanntmachung des Hinweises auf die Patenterteilung: **16.02.2022**
(21) Anmeldenummer: 20165107.2
(22) Anmeldetag: 24.03.2020
(51) Int. Cl.: B29D 30/00

(54) **VERFAHREN UND VORRICHTUNG ZUM AUSRICHTEN UND AUFRICHTEN EINES FAHRZEUGREIFENS IM ZUGE DER AUTOMATISIERTEN EINBRINGUNG EINES BAUTEILES IN DEN FAHRZEUGREIFEN**
METHOD AND DEVICE FOR ALIGNING AND ERECTING A VEHICLE TYRE IN THE COURSE OF THE AUTOMATED INSTALLATION OF A COMPONENT IN THE VEHICLE TYRE
PROCÉDÉ ET DISPOSITIF D'ALIGNEMENT ET DE MONTAGE D'UN PNEU DE VÉHICULE DANS LE CADRE DE L'APPLICATION AUTOMATISÉE D'UN COMPOSANT DANS LES PNEUS DE VÉHICULE

(30) Priorität: 21.05.2019 DE 102019207400
(43) Veröffentlichungstag der Anmeldung: 25.11.2020
(73) Patentinhaber: Continental Reifen Deutschland GmbH, 30165 Hannover (DE)
(72) Erfinder: Schmid, Eike-Christian, 30419 Hannover (DE); Lohner, Alexander, 30419 Hannover (DE)
(74) Vertreter: Continental Corporation

(56) Entgegenhaltungen:
- EP-A1- 2 862 702
- JP-A- 2008 006 783
- US-A- 4 739 724

## Beschreibung

Die Erfindung betrifft ein Verfahren zum Ausrichten und Aufrichten eines Fahrzeugreifens im Zuge der automatisierten Einbringung eines Bauteiles in den ausvulkanisierten Fahrzeugreifen, bei welchem der Fahrzeugreifen in liegender horizontaler Ausrichtung auf einem Auflagetisch mit beweglichen Rollen bereitgestellt wird, anschließend in eine aufrechte Position gekippt und dann das Bauteil auf die Reifeninnenseite appliziert wird. Die Erfindung betrifft ferner auch eine entsprechende Vorrichtung zum Ausrichten und Aufrichten eines Fahrzeugreifens.

Das Verfahren und die Vorrichtung dienen dazu, ein vorgesehenes Bauteil auf der Reifeninnenseite des ausvulkanisierten Fahrzeugreifens automatisiert anzubringen. Bei dem Bauteil kann es sich beispielsweise um einen Schaumstoffstreifen, einzelne Schaumstoffstücke oder -streifen, andere Reifenbestandteile oder mindestens einen Sensor u. dgl. handeln.

Es ist bekannt, als ein solches Bauteil beispielsweise in Pkw-Fahrzeugreifen eine streifenförmige Schaumstoffeinlage zur Geräuschreduzierung einzukleben, die entstehenden Schall absorbiert. Üblicherweise wird die Schaumstoffeinlage dabei nach dem Ausvulkanisieren des Fahrzeugreifens manuell in den Fahrzeugreifen eingelegt, angedrückt und kontrolliert.

Die manuelle Applikation der Schaumstoffeinlage im Fahrzeugreifen ist aufwendig und mit einer schwankenden Qualität verbunden, die auch stark vom einzelnen Arbeiter und dessen Tagesform abhängt. Wünschenswert wäre daher ein automatisches Einbringen der Schaumstoffeinlage in den Fahrzeugreifen. Hierbei besteht jedoch das Problem, dass ein solcher Prozess schwierig zu automatisieren ist, da die Schaumstoffeinlage spannungsfrei, d. h. frei von Druck- und insbesondere Zugspannungen in Umfangsrichtung in den Fahrzeugreifen eingebracht werden muss, damit sie sich später im Betrieb nicht wieder ablöst. Außerdem muss die Schaumstoffeinlage mittig im Fahrzeugreifen ausgerichtet werden und der Stoß soll an einer definierten Stelle im Reifen liegen. Die frisch vulkanisierten Reifen sind wiederum noch relativ weich und von daher ebenfalls elastisch verformbar, was insgesamt dazu führt, dass sich ein automatisierter Prozess nur dadurch bewerkstelligen lässt, dass der manuelle Prozess nachgeahmt wird.

Aus der EP 2 862 702 B1 ist bereits ein Verfahren zum Einbringen einer Schaumstoffeinlage in einen Fahrzeugreifen mit einem automatisierten Applikator bekannt, jedoch bereitet das reproduzierbar genaue Bereitstellen des Fahrzeugreifens für den Einsatz des Applikators aus den vorangehend erläuterten Gründen große Schwierigkeiten.

Der Erfindung liegt die Aufgabe zugrunde, Fahrzeugreifen unterschiedlicher Größe (Außendurchmesser, Reifenbreite, Seitenwandhöhe) so auszurichten und zu handhaben, dass ein entsprechendes Bauteil, beispielsweise eine Schaumstoffeinlage definiert und reproduzierbar und unter Erfüllung höchster Qualitätsanforderungen in den Fahrzeugreifen eingebracht werden kann.

Zur Lösung der gestellten Aufgabe wird erfindungsgemäß ein Verfahren gemäß den Merkmalen des Patentanspruchs 1 vorgeschlagen.

Eine erfindungsgemäße Vorrichtung ist Gegenstand des Patentanspruchs 8.

Vorteilhafte Ausgestaltungen und Weiterbildungen des erfindungsgemäßen Verfahrens und der Vorrichtung sind Gegenstand der jeweils abhängigen Ansprüche.

Die Erfindung schlägt vor, dass der auf dem Auflagetisch bereitgestellte Fahrzeugreifen zwischen zum Fahrzeugreifen diametral gegenüberliegenden und gegeneinander verfahrbaren Spannbacken im Bereich seines Außenumfangs gespannt und zentriert wird, wobei jede Spannbacke zwei voneinander beabstandete drehbar gelagerte Spannrollen umfasst, die an den Umfang des Fahrzeugreifens angelegt werden und jeweils einen Drehgeber zur Ermittlung der Drehzahl und/oder der Drehposition der jeweiligen Spannrolle aufweisen und wobei eine Spannrolle jeder Spannbacke drehangetrieben wird, um den Fahrzeugreifen rotieren zu lassen und die andere Spannrolle frei rotiert, wobei die Drehzahlen der Spannrollen verglichen werden und bei Auftreten von Abweichungen eine Nachjustierung der Drehzahl der angetriebenen Spannrolle bewirkt wird. Die Spannbacken werden gemeinsam mit dem Auflagetisch und dem gespannten Fahrzeugreifen in die aufrechte Position gekippt und anschließend wird das Bauteil appliziert.

Durch diese Ausgestaltung ist es möglich, Fahrzeugreifen unterschiedlicher Größe (Außendurchmesser, Reifenbreite, Seitenwandhöhe) exakt definiert auszurichten und zwischen den Spannbacken zu zentrieren, wobei etwaige Abweichungen in der Positionierung sich durch entstehenden Schlupf zwischen den drehangetriebenen Spannrollen und dem Umfang des Fahrzeugreifens äußern, der durch den vorgenommenen Drehzahlvergleich zuverlässig detektiert werden kann. Anschließend können diese Abweichungen durch entsprechende Nachjustierung der Drehzahl der angetriebenen Spannrollen eliminiert werden. Im Ergebnis ist der Fahrzeugreifen reproduzierbar und wiederholgenau unabhängig von seiner Größe beim Kippen des Fahrzeugreifens in die aufrechte Position exakt ausgerichtet, sodass nachfolgend in an sich bekannter Weise ein Applikator in den aufgerichteten Reifen einfahren und das Bauteil, etwa die Schaumstoffeinlage in definierter Weise automatisch in dem Fahrzeugreifen applizieren kann.

Bei dem Drehgeber zur Ermittlung der Drehzahl und/oder Drehposition der jeweiligen Spannrolle kann es sich beispielsweise um einen Inkrementalgeber handeln.

Zur weiteren Steigerung der wiederholgenauen Reproduzierbarkeit des automatischen Einbringens des Bauteils wird vorgeschlagen, dass die Winkellage des zwischen den Spannbacken gespannten Fahrzeugreifens erfasst wird und der Fahrzeugreifen vor dem Applizieren des Bauteils in eine definierte vorbestimmte Winkellage zwischen den Spannbacken rotiert wird. Hierdurch wird sichergestellt, dass sich der Fahrzeugreifen nicht nur exakt ausgerichtet zwischen den Spannbacken befindet, wenn er zum Einfahren des Applikators in die vertikal aufrechte Position gekippt wird, sondern auch stets mit gleicher Winkellage für den Applikator bereitgestellt wird, sodass das Bauteil an stets gleicher definierter Stelle im Fahrzeugreifen appliziert wird. Sofern es sich bei dem Bauteil um eine Schaumstoffeinlage handelt, befindet sich auf diese Weise der Stoß der eingebrachten Schaumstoffeinlage stets an gleicher definierter Stelle entlang des Umfangs des Fahrzeugreifens.

Die Winkellage des Fahrzeugreifens kann nach einem Vorschlag der Erfindung mittels eines industriellen Bilderkennungs- und Bildverarbeitungssystems erfasst werden, welches die Winkellage beispielsweise anhand einer geeigneten Markierung auf dem Fahrzeugreifen ermittelt, die vorzugsweise auf der Seitenwand des Fahrzeugreifens bei dessen Herstellung erzeugt wird. Anhand der ermittelten Winkellage wird sodann ein Korrekturwert zum Rotieren des Fahrzeugreifens in die definierte Winkellage berechnet und die drehangetriebenen Spannrollen werden entsprechend angesteuert, sodass der Fahrzeugreifen gegebenenfalls soweit rotiert wird, dass er die gewünschte definierte Winkellage einnimmt.

Zur Reduzierung der Zykluszeit kann nach einem weiteren Vorschlag der Erfindung das Rotieren des Fahrzeugreifens in die definierte Winkellage während des Kippens der Spannbacken und des Auflagetischs mit dem Fahrzeugreifen in die aufrechte Position bewirkt werden, sodass das Aufrichten des Reifens simultan zur Drehung in die gewünschte Winkellage erfolgt.

In der stehenden bzw. aufrechten Position kann der Fahrzeugreifen anschließend über die angetriebenen Spannrollen unter Einsatz des in den Fahrzeugreifen einfahrenden Applikators definiert gedreht werden, wobei der Applikator das Bauteil auf die Fahrzeugreifen-Innenseite, beispielsweise unterhalb der Lauffläche appliziert.

Nach einem weiteren Vorschlag der Erfindung wird vor dem Kippen des Fahrzeugreifens in die aufrechte Position oberseitig eine parallel zum Auflagetisch verlaufende Spannplatte mit beweglichen Rollen auf den Fahrzeugreifen aufgelegt und gemeinsam mit dem Auflagetisch unter Zwischenlage des Fahrzeugreifens in die aufrechte Position gekippt. Dies verhindert, dass der Fahrzeugreifen in seiner aufrechten, stehenden Ausrichtung bei anschließender Rotation um seine Achse in Richtung der Drehachse wandert.

Nach Applizierung des Bauteils kann der Fahrzeugreifen gemeinsam mit dem Auflagetisch und den Spannbacken sowie der gegebenenfalls vorhandenen Spannplatte wieder zurück in die horizontaler Ausrichtung zurückgeführt werden, die gegebenenfalls vorhandene Spannplatte abgehoben und die Spannbacken durch eine voneinander weg gerichtete Bewegung geöffnet werden, wodurch der Fahrzeugreifen freigegeben wird und anschließend vom Auflagetisch abgefördert wird, sodass der Prozess mit einem weiteren Fahrzeugreifen von neuem gestartet werden kann.

Die erfindungsgemäße Vorrichtung zum Einbringen eines Bauteils, beispielsweise einer Schaumstoffeinlage in einen Fahrzeugreifen umfasst einen mit beweglichen Rollen versehenen Auflagetisch für den Fahrzeugreifen und an gegenüberliegenden Seiten des Auflagetisches angeordnete und gegeneinander verfahrbare Spannbacken für den Fahrzeugreifen, die jeweils parallel zueinander und voneinander beabstandet angeordnete Spannrollen aufweisen, welche am Umfang eines auf dem Auflagetisch in horizontaler Ausrichtung befindlichen Fahrzeugreifens anlegbar sind, wobei jeweils eine Spannrolle der Spannbacken einen Drehantrieb aufweist und die andere Spannrolle frei drehbar gelagert ist und alle Spannrollen mit einem Drehgeber zur Ermittlung der Drehzahl und/oder Drehposition der Spannrollen ausgerüstet sind, wobei ferner eine Steuerungseinrichtung zum Vergleichen der Drehzahlen der Spannrollen vorgesehen ist, mittels derer bei auftretenden Drehzahlunterschieden die Drehzahl der angetriebenen Spannrollen justierbar ist, und die Spannbacken gemeinsam mit dem Auflagetisch und dem eingespannten Fahrzeugreifen in eine aufrechte Position kippbar sind.

Hierbei ist nach einem Vorschlag der Erfindung eine Erfassungseinrichtung zum Erfassen der Winkellage eines auf dem Auflagetisch zwischen den Spannbacken gespannten Fahrzeugreifens vorgesehen, mittels derer Steuerbefehle zum Rotieren des Fahrzeugreifens in eine definierte vorgebbare Winkellage erzeugbar sind. Auf diese Weise ist es möglich, den Fahrzeugreifen stets so zu positionieren, dass das applizierte Bauteil in Bezug auf den Umfang des Fahrzeugreifens exakt an gleicher Stelle zum Liegen kommt. Sofern es sich beim applizierten Bauteil um eine Schaumstoffeinlage handelt, kommt auf diese Weise der Stoß der applizierten Schaumstoffeinlage in Bezug auf den Umfang des Fahrzeugreifens exakt an gleicher Stelle zum Liegen.

Die beweglichen Rollen des Auflagetisches können beispielsweise von Allseitenrollen gebildet sein, die eine freie Drehbarkeit und Verschiebbarkeit des Fahrzeugreifens auf dem Auflagetisch sicherstellen.

Um zu verhindern, dass der Reifen in seiner stehenden, aufrechten Position bei Rotation um seine eigene Achse in Richtung seiner Drehachse wandert, was der Präzision des automatisierten Einbringens des Bauteils abträglich wäre, wird vorgeschlagen, dass eine Spannplatte mit beweglichen Rollen vorgesehen ist, die oberseitig auf den auf dem Auflagetisch aufliegenden Fahrzeugreifen auflegbar und gemeinsam mit diesem in die aufrechte Position kippbar ist und den Fahrzeugreifen am unerwünschten Wandern in Richtung seiner Drehachse hindert.

Auch die beweglichen Rollen der Spannplatte können nach einem Vorschlag der Erfindung als Allseitenrollen ausgebildet sein.

Der Auflagetisch ist nach einem Vorschlag der Erfindung mit einer Zuführeinheit und einer Ausfördereinheit zum Zu- bzw. Ausfördern eines Fahrzeugreifens zu bzw. von dem Auflagetisch in liegender horizontaler Ausrichtung versehen.

Die Zuführeinheit und die Ausfördereinheit können beispielsweise jeweils einen Bandförderer umfassen, der bei Nichtgebrauch in eine Position absenkbar ist, in welcher er nicht mit dem auf dem Auflagetisch aufliegenden Fahrzeugreifen in Kontakt steht und insoweit bei Nichtgebrauch außer Eingriff ist. Wird eine Förderung im Bereich der Zuführeinheit und/oder der Ausfördereinheit erforderlich, wird der Bandförderer aus seiner abgesenkten Position angehoben und kommt mit dem Fahrzeugreifen in Kontakt, sodass eine Förderung in Richtung des Bandförderers bewirkt werden kann.

Die Erfindung ermöglicht somit die Herstellung von Fahrzeugreifen mit einem innenliegenden applizierten Bauteil, bei der das Einbringen des Bauteiles in den Fahrzeugreifen vollständig automatisiert wird, da die definierte Ausrichtung und Handhabung der Fahrzeugreifen hierfür notwendige Voraussetzung darstellt und von der Erfindung gewährleistet wird.

Weitere Ausgestaltungen und Einzelheiten des erfindungsgemäßen Verfahrens und der Vorrichtung werden nachfolgend anhand der ein Ausführungsbeispiel darstellenden Zeichnung erläutert. Es zeigen:
- Figur 1: eine nach dem erfindungsgemäßen Verfahren arbeitende Vorrichtung in einem ersten Arbeitsschritt;
- Figur 2: die Vorrichtung gemäß Figur 1 in einem zweiten Arbeitsschritt;
- Figur 3: die Vorrichtung gemäß Figur 1 in einem dritten Arbeitsschritt;
- Figur 4: die Vorrichtung gemäß Figur 1 in einem vierten Arbeitsschritt.

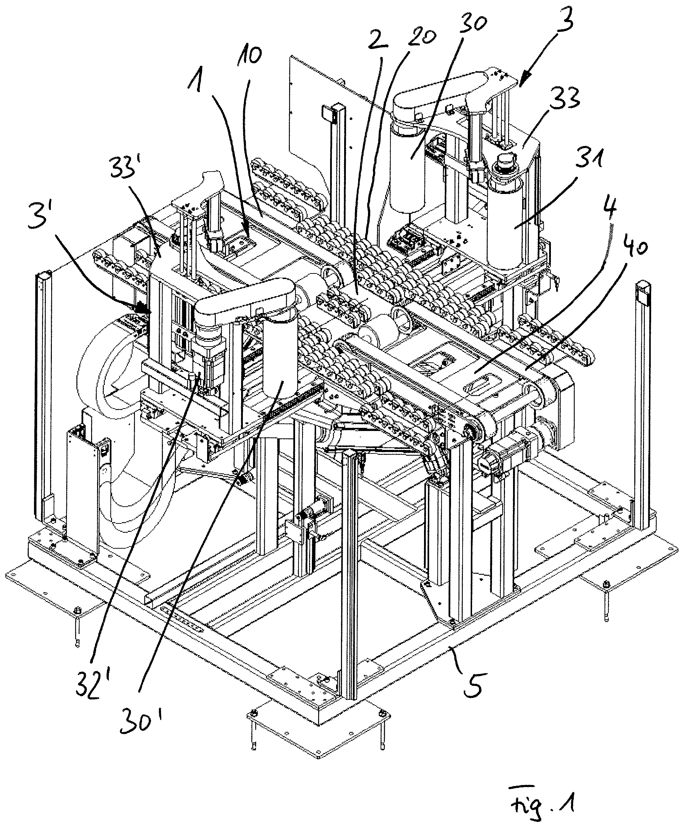

Aus den Figuren 1 bis 4 ist eine Vorrichtung zum Ausrichten und Aufrichten eines Fahrzeugreifens im Zuge der automatisierten Einbringung eines Bauteiles, hier beispielhaft eines Schaumstoffstreifens in den Fahrzeugreifen in aufeinanderfolgenden Arbeitsstätten dargestellt, wobei zur besseren Übersichtlichkeit der Fahrzeugreifen selbst nicht dargestellt ist. Es versteht sich jedoch, dass anstelle der im Folgenden anhand eines Schaumstoffstreifens als Bauteil erläuterten Funktion und Arbeitsweise auch andere Bauteile, wie Sensoren, mehrere Schaumstoffstücke bzw. -streifen oder andere Reifenbestandteile und dergleichen automatisiert in den Fahrzeugreifen eingebracht bzw. auf diesen appliziert werden können.

Die Vorrichtung ist in einem aus Profilabschnitten gebildeten Gestell 5 aufgebaut und beispielsweise in eine nicht näher dargestellte Fertigungsstraße zur Herstellung von Fahrzeugreifen integriert.

Die Vorrichtung umfasst einen mit einer Vielzahl von beweglichen Rollen 20, beispielsweise Allseitenrollen ausgebildeten Auflagetisch 2, der in der Darstellung gemäß Figur 1 horizontal ausgerichtet ist.

An zwei gegenüberliegenden Seiten des Auflagetisches 2 ist eine Zuführeinheit 1 und eine Ausfördereinheit 4 vorgesehen, die jeweils drehangetriebene Bandförderer 10, 40 umfassen, um einen zuvor hergestellten Fahrzeugreifen in liegender, horizontaler Ausrichtung über die Zuführeinheit 1 und den zugeordneten Bandförderer 10 auf den Auflagetisch 2 zu fördern und nach Abschluss der Fertigungsschritte mittels der Ausfördereinheit 4 und des zugeordneten Bandförderers 40 aus der Vorrichtung, d. h. vom Auflagetisch 2 abzufördern.

In der in der Figur 1 dargestellten Konfiguration ist der Bandförderer 10 der Zuführeinheit 1 horizontal ausgerichtet, sodass er mit der Seitenflanke eines aufliegenden Fahrzeugreifens in Kontakt kommt. Durch entsprechenden Antrieb des Bandförderers 10 kann der Fahrzeugreifen auf die von Allseitenrollen gebildeten beweglichen Rollen 20 des Auflagetisches 2 gefördert werden, sodass der Fahrzeugreifen entsprechend bereitgestellt wird.

An den beiden verbleibenden gegenüberliegenden Seiten des Auflagetisches 2, d. h. etwa rechtwinklig zur Zuführeinheit 1 und Ausfördereinheit 4 sind zwei im Wesentlichen übereinstimmend aufgebaute Spannbacken 3, 3', angeordnet, die mittels nicht näher dargestellter Linearantriebe geradlinig aufeinander zu bzw. in entgegengesetzter Richtung voneinander weg bewegbar sind. In der in der Figur 1 dargestellten Konfiguration befinden sich die Spannbacken 3, 3' in maximalem Abstand voneinander, sodass der Fahrzeugreifen mittels der Zuführeinheit 1 ungehindert auf den Auflagetisch 2 und zwischen die Spannbacken 3, 3' befördert werden kann.

Jede Spannbacke 3, 3' umfasst zwei parallel zueinander ausgerichtete und an einer gemeinsamen Lagerplatte 33, 33' drehbar gelagerte Spannrollen 30, 31, 30', 31', die in der dargestellten horizontalen Ausrichtung des Auflagetischs 2 vertikal rechtwinklig zu diesem ausgerichtet sind. Entsprechend verlaufen auch die Drehachsen der Spannrollen 30, 31, 30', 31' vertikal rechtwinklig zum Auflagetisch 2.

Jeweils eine Spannrolle 30, 30' beider Spannbacken 3, 3' ist mit einem Drehantrieb 32, 32' versehen und nach Maßgabe einer nicht dargestellten Steuerungseinrichtung drehantreibbar, wobei die Drehantriebe 32, 32' vorzugsweise von einem Servomotor mit nachgeschaltetem Ketten- oder Riemenantrieb oder einem entsprechenden Direktantrieb gebildet sind.

Die demgegenüber verbleibenden weiteren Spannrollen 31, 31' beider Spannbacken 3, 3' sind hingegen nicht drehangetrieben, sondern lediglich frei drehbar an der Lagerplatte 33, 33' gelagert.

Alle Spannrollen 30, 31, 30', 31' der Spannbacken 3, 3' sind jedoch mit einem Drehgeber ausgerüstet, über den die jeweilige Drehzahl und/oder Drehposition jeder einzelnen Spannrolle 30, 31, 30', 31' fortlaufend ermittelbar und einer nicht dargestellten Steuerungseinrichtung zuführbar ist.

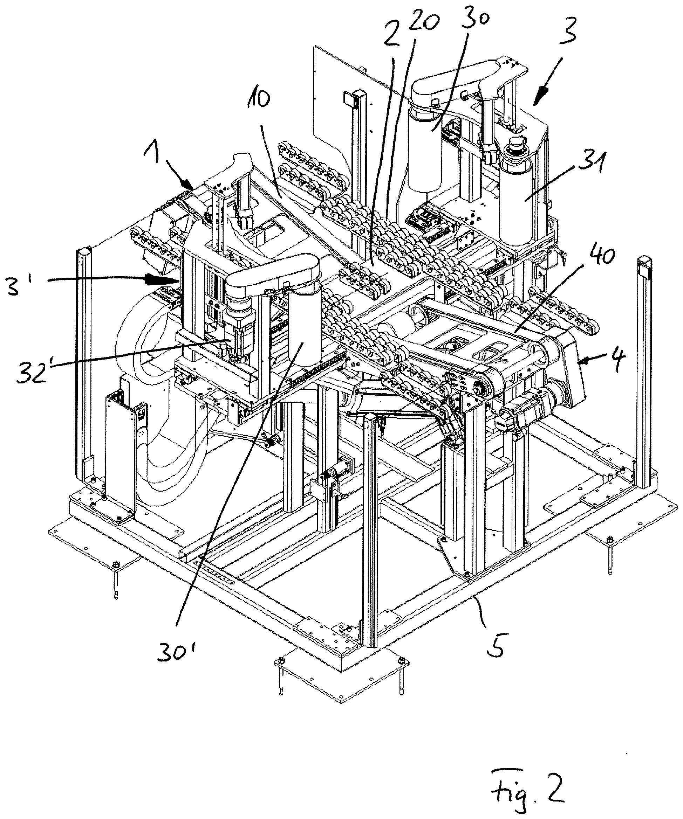

Nachdem gemäß Figur 1 und der vorangehenden Erläuterung ein hier nicht dargestellter Fahrzeugreifen zwischen den auseinandergefahrenen Spannbacken 3, 3' von der Zuführeinheit 1 auf den Auflagetisch 2 befördert worden ist, werden gemäß Darstellung in der Figur 2 die im nächsten Arbeitsschritt nicht benötigte Zuführeinheit 1 und Ausfördereinheit 4 durch Absenken der jeweiligen Bandförderer 10,40 außer Eingriff mit dem auf den beweglichen Rollen 20 des Auflagetisches 2 aufliegenden Fahrzeugreifen gebracht, was beispielsweise durch eine entsprechende pneumatische Hubverstellung bewirkt werden kann.

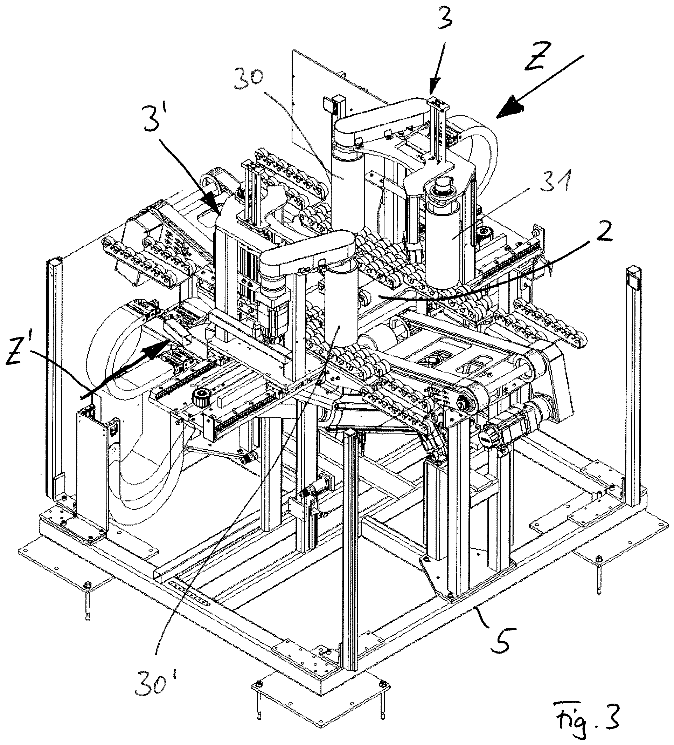

Anschließend werden gemäß Figur 3 die Spannbacken 3, 3' gegeneinander unter Verringerung des verbleibenden Abstands zwischen diesen gemäß Pfeilen Z, Z' linear verfahren, wobei der auf dem Auflagetisch 2 aufliegende Fahrzeugreifen im Bereich seines Umfanges zwischen den sich anlegenden Spannrollen 30, 31, 30', 31' gespannt und zentriert wird, indem die einzelnen Spannrollen 30, 31, 30', 31' am Umfang des Fahrzeugreifens im Bereich seiner Lauffläche zur Anlage kommen.

Anschließend werden die Drehantriebe 32, 32' der drehangetriebenen Spannrollen 30, 30' aktiviert und drehen den umfänglich anliegenden Fahrzeugreifen um eine vertikal durch den Auflagetisch 2 verlaufende Drehachse. Die ebenfalls am Umfang des Fahrzeugreifens anliegenden nicht drehangetriebenen Spannrollen 31, 31' werden entsprechend passiv mitgedreht.

Da die Anordnung der angetriebenen und nicht angetriebenen Spannrollen 30, 31, 30', 31' der beiden Spannbacken 3, 3' über den Umfang des Fahrzeugreifens so gewählt ist, dass jeweils eine drehangetriebene Spannrolle 30, 30' abwechselnd auf eine nicht drehangetriebene Spannrolle 31, 31' folgt, kann durch die nicht angetriebenen Spannrollen 31, 31' ein eventuell auftretender Schlupf zwischen den Spannrollen 30, 30', 31, 31' unmittelbar durch Drehzahlvergleich aller Spannrollen 30, 30', 31, 31' über die Steuerungseinrichtung ermittelt werden, sobald die drehangetriebenen Spannrollen 31, 31' den eingespannten Fahrzeugreifen in Rotation versetzen. Bei Auftreten von Drehzahlunterschieden kann sodann mittels der Steuerungseinrichtung eine Nachjustierung der Drehzahl der angetriebenen Spannrollen 30, 30' bewirkt werden, bis die Drehzahlunterschiede ausgeglichen sind.

Darüber hinaus oder alternativ kann ein solcher ermittelter Schlupf, der auf eine nicht exakte Positionierung und Zentrierung des Fahrzeugreifens zwischen den Spannbacken 3, 3' hindeutet, auch dadurch ausgeregelt werden, dass die Steuerungseinrichtung eine entsprechende Nachjustierung der Positionierung der Spannbacken 3, 3' bewirkt, bis kein Schlupf mehr auftritt und der Reifen somit exakt und definiert zwischen den Spannbacken 3, 3' gespannt und zentriert ist.

Zur Erhöhung der Drehmomentübertragung zwischen dem Fahrzeugreifen und den Spannrollen 30, 30', 31, 31' verfügen diese vorzugsweise über eine profilierte, beispielsweise gerändelte Rollenoberfläche.

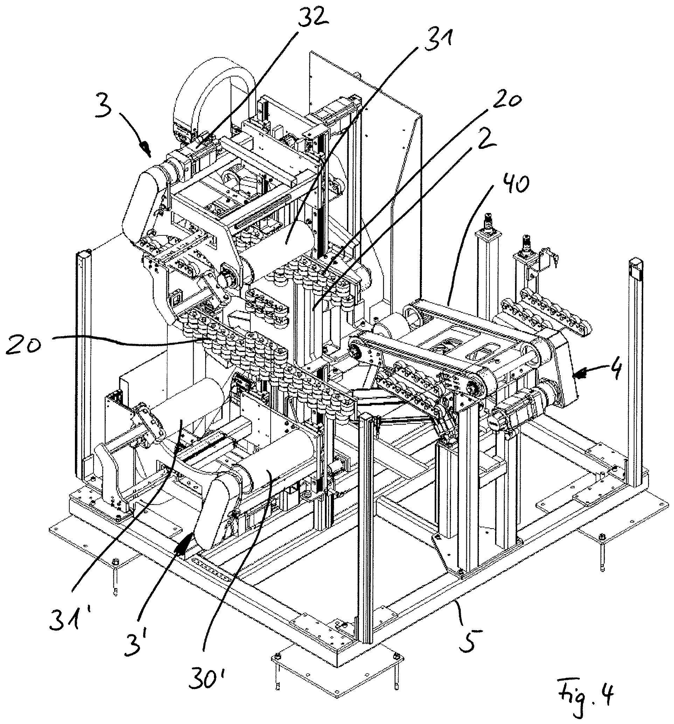

Anschließend kann, wie aus der Figur 4 ersichtlich, die gesamte Anordnung aus Auflagetisch, Spannbacken 3, 3' sowie dem darin befindlichen Fahrzeugreifen in eine um 90° gedrehte vertikale, aufrechte Ausrichtung gekippt werden, sodass nachfolgend ein nicht näher dargestellter Applikator in den exakt zwischen den Spannbacken 3, 3' zentrierten Fahrzeugreifen einfahren kann. Mittels der drehangetriebenen Spannbacken 30, 30' wird der Fahrzeugreifen während der Applikation des Schaumstoffstreifens um seine Achse gedreht und insoweit kann der Schaumstoffstreifen definiert und reproduzierbar wiederholgenau mit höchstem Qualitätsanspruch automatisch in den Fahrzeugreifen eingebracht werden.

Zusätzlich kann nach dem exakten Ausrichten des Fahrzeugreifens zwischen den beiden Spannbacken 3, 3' und beispielsweise während des Kippens der Anordnung in die aus der Figur 4 ersichtliche Ausrichtung mittels einer Erfassungseinrichtung zum Erfassen der Winkellage des auf dem Auflagetisch 2 befindlichen Fahrzeugreifens, beispielsweise eines an geeigneter Position angeordneten industriellen Bilderkennungs-und Bildverarbeitungssystems, anhand mindestens einer Markierung auf dem Fahrzeugreifen die Winkellage des Fahrzeugreifens in Bezug auf die Spannbacken 3, 3' erfasst werden. Bei einer ermittelten Abweichung zu einem vorgebbaren Sollwert der Winkellage kann sodann eine Ansteuerung der drehangetriebenen Spannrollen 30, 30' dergestalt bewirkt werden, dass der Fahrzeugreifen beim Erreichen der aus der Figur 4 ersichtlichen aufrecht gekippten Position exakt in der gleichen vorbestimmten Soll-Winkellage ausgerichtet ist, sodass der Applikationsvorgang der Schaumstoffeinlage in Bezug auf den Umfang des Fahrzeugreifens stets an gleicher Stelle beginnt und insoweit der Stoß der Schaumstoffeinlage an einer definierten Stelle im Fahrzeugreifen liegt.

Nach dem erfolgten Einbringen der Schaumstoffeinlage mittels des Applikators in den Fahrzeugreifen kann die Anordnung aus der in der Figur 4 ersichtlichen Konfiguration wieder zurück in die horizontale Ausrichtung des Auflagetisches 2 gemäß Figur 3 zurückgeschwenkt werden und die Spannbacken 3, 3'werden entgegen Pfeilen Z, Z' wieder auseinandergefahren und insoweit geöffnet und geben den Fahrzeugreifen frei. Anschließend werden gemäß Figur 1 die Bandförderer 10, 40 wieder in ihre horizontale Ausrichtung angehoben, sodass der Bandförderer 40 in Kontakt mit der Seitenwand des auf dem Auflagetisch 2 liegenden Fahrzeugreifens kommt und diesen in der Darstellung gemäß Figur 1 nach rechts aus der Vorrichtung ausfördern kann.

Anschließend ist die Vorrichtung für eine erneute Bestückung eines Fahrzeugreifens mit einer Schaumstoffeinlage bereit und der Vorgang beginnt von neuem.

In einer hier nicht dargestellten Weiterbildung der Erfindung ist es zusätzlich möglich, auf den in liegender Ausrichtung auf dem Auflagetisch 2 bereitgestellten Fahrzeugreifen eine weitere Spannplatte mit beweglichen Rollen in paralleler Ausrichtung zum Auflagetisch 2 und unter Zwischenlage des Fahrzeugreifens aufzulegen und anschließend gemeinsam mit dem Auflagetisch 2 in die aus der Figur 4 ersichtliche gekippte Ausrichtung zu überführen, sodass der Fahrzeugreifen 2 in dieser Ausrichtung an einem Auswandern in Richtung seiner Drehachse bei Rotation desselben gehindert wird.

Die vorangehend erläuterte Erfindung ermöglicht es, die Herstellung von mit Schaumstoffeinlagen versehenen Fahrzeugreifen vollständig zu automatisieren, da sie die für diesen Vorgang benötigte definierte Ausrichtung und Handhabung der Reifen mit höchster Präzision sicherstellt.

### Bezugszeichenliste

- 1: Zuführeinheit
- 2: Auflagetisch
- 3, 3': Spannbacke
- 4: Ausfördereinheit
- 5: Gestell
- 10: Bandförderer
- 20: bewegliche Rollen
- 30, 30': angetriebene Spannrolle
- 31, 31': nicht angetriebene Spannrolle
- 32, 32': Drehantrieb
- 33, 33': Lagerplatte
- 40: Bandförderer

- Z, Z': Verfahrrichtung

## Patentansprüche

1. Verfahren zum Ausrichten und Aufrichten eines Fahrzeugreifens im Zuge der automatisierten Einbringung eines Bauteiles in den Fahrzeugreifen, bei welchem der Fahrzeugreifen in liegender horizontaler Ausrichtung auf einem Auflagetisch (2) mit beweglichen Rollen (20) bereitgestellt wird, anschließend in eine aufrechte Position gekippt und dann das Bauteil auf die Reifeninnenseite appliziert wird, **dadurch gekennzeichnet, dass** der auf dem Auflagetisch (2) bereitgestellte Fahrzeugreifen zwischen zum Fahrzeugreifen diametral gegenüberliegenden und gegeneinander verfahrbaren Spannbacken (3, 3') im Bereich seines Außenumfangs gespannt und zentriert wird, wobei jede Spannbacke (3, 3') zwei voneinander beabstandete drehbar gelagerte Spannrollen (30, 31, 30', 31') umfasst, die an den Umfang des Fahrzeugreifens angelegt werden und jeweils einen Drehgeber zur Ermittlung der Drehzahl und/oder Drehposition der jeweiligen Spannrolle (30, 31, 30', 31') aufweisen und wobei eine Spannrolle (30, 30') jeder Spannbacke (3, 3') drehangetrieben wird, um den Fahrzeugreifen rotieren zu lassen und die andere Spannrolle (31, 31') frei rotiert, wobei die Drehzahlen der Spannrollen (30, 31, 30', 31') verglichen werden und bei Auftreten von Abweichungen eine Nachjustierung der Drehzahl der drehangetriebenen Spannrollen (30, 30') bewirkt wird und dann die Spannbacken (3, 3') gemeinsam mit dem Auflagetisch (2) und dem gespannten Fahrzeugreifen in die aufrechte Position gekippt werden und anschließend das Bauteil appliziert wird.

2. Verfahren nach Anspruch 1, **dadurch gekennzeichnet, dass** die Winkellage des zwischen den Spannbacken (3, 3') gespannten Fahrzeugreifens erfasst wird und der Fahrzeugreifen vor dem Applizieren des Bauteiles in eine definierte vorbestimmte Winkellage zwischen den Spannbacken (3, 3') rotiert wird.

3. Verfahren nach Anspruch 2, **dadurch gekennzeichnet, dass** die Winkellage mittels eines Bilderkennungs- und Bildverarbeitungssystems anhand mindestens einer Markierung auf dem Fahrzeugreifen ermittelt und ein Korrekturwert zum Rotieren des Fahrzeugreifens in die definierte Winkellage berechnet wird und die drehangetriebenen Spannrollen (30, 30') entsprechend angesteuert werden.

4. Verfahren nach einem der Ansprüche 2 oder 3, **dadurch gekennzeichnet, dass** das Rotieren des Fahrzeugreifens in die definierte Winkellage während des Kippens der Spannbacken (3, 3') und des Auflagetischs (2) mit dem Fahrzeugreifen in die aufrechte Position bewirkt wird.

5. Verfahren nach einem der Ansprüche 1 bis 4, **dadurch gekennzeichnet, dass** auf den Fahrzeugreifen vor dem Kippen in die aufrechte Position oberseitig eine parallel zum Auflagetisch (2) verlaufende Spannplatte mit beweglichen Rollen aufgelegt und gemeinsam mit dem Auflagetisch (2) unter Zwischenlage des Fahrzeugreifens in die aufrechte Position gekippt wird.

6. Verfahren nach einem der Ansprüche 1 bis 5, **dadurch gekennzeichnet, dass** nach Applizierung des Bauteils der Fahrzeugreifen gemeinsam mit dem Auflagetisch (2) und den Spannbacken (3, 3') in die horizontale Ausrichtung zurückgeführt wird, die Spannbacken (3, 3') geöffnet und der Fahrzeugreifen vom Auflagetisch (2) abgefördert wird.

7. Verfahren nach einem der Ansprüche 1 bis 6, **dadurch gekennzeichnet,** das als Bauteil ein Schaumstoffstreifen oder ein Sensor appliziert wird.

8. Vorrichtung zur Durchführung des Verfahrens nach einem der Ansprüche 1 bis 7, umfassend einen mit beweglichen Rollen (20) versehenen Auflagetisch für den Fahrzeugreifen und an zwei gegenüberliegenden Seiten des Auflagetisches angeordnete und gegeneinander verfahrbare Spannbacken (3, 3') für den Fahrzeugreifen, die jeweils zwei parallel zueinander und voneinander beabstandet angeordnete Spannrollen (30, 31, 30', 31') aufweisen, welche am Umfang eines auf dem Auflagetisch (2) in horizontaler Ausrichtung befindlichen Fahrzeugreifens anlegbar sind, wobei jeweils eine Spannrolle (30, 30') der Spannbacken (3, 3') einen Drehantrieb (32, 32') aufweist und die andere Spannrolle (31, 31') frei drehbar gelagert ist und alle Spannrollen (30, 31, 30', 31') mit einem Drehgeber zur Ermittlung der Drehzahl und/oder Drehposition der Spannrollen (30, 31, 30', 31') ausgerüstet sind, wobei ferner eine Steuerungseinrichtung zum Vergleichen der Drehzahlen der Spannrollen (30, 31, 30', 31') vorgesehen ist, mittels derer bei auftretenden Drehzahlunterschieden die Drehzahl der angetriebenen Spannrollen (30, 30') justierbar ist, und die Spannbacken (3, 3') gemeinsam mit dem Auflagetisch (2) und dem gespannten Fahrzeugreifen in eine aufrechte Position kippbar sind.

9. Vorrichtung nach Anspruch 8, **dadurch gekennzeichnet, dass** eine Erfassungseinrichtung zum Erfassen der Winkellage eines auf dem Auflagetisch (2) zwischen den Spannbacken (3, 3') gespannten Fahrzeugreifens vorgesehen ist, mittels derer Steuerbefehle zum Rotieren des Fahrzeugreifens in eine definierte vorgebbare Winkellage erzeugbar sind.

10. Vorrichtung nach einem der Ansprüche 8 oder 9, **dadurch gekennzeichnet, dass** die beweglichen Rollen (20) des Auflagetisches (2) als Allseitenrollen ausgebildet sind.

11. Vorrichtung nach einem der Ansprüche 8 bis 10, **dadurch gekennzeichnet, dass** eine Spannplatte mit beweglichen Rollen vorgesehen ist, die oberseitig auf den auf dem Auflagetisch (2) aufliegenden Fahrzeugreifen auflegbar und gemeinsam mit diesem in die aufrechte Position kippbar ist.

12. Vorrichtung nach Anspruch 11, **dadurch gekennzeichnet, dass** die beweglichen Rollen der Spannplatte als Allseitenrollen ausgebildet sind.

13. Vorrichtung nach einem der Ansprüche 8 bis 12, **dadurch gekennzeichnet, dass** der Auflagetisch (2) mit einer Zuführeinheit (1) und einer Ausfördereinheit (4) zum Zu- bzw. Ausfördern eines Fahrzeugreifens zu bzw. von dem Auflagetisch (2) in liegender horizontaler Ausrichtung versehen ist.

14. Vorrichtung nach Anspruch 13, **dadurch gekennzeichnet, dass** die Zuführeinheit (1) und die Ausfördereinheit (4) jeweils einen Bandförderer (10, 40) umfassen, der bei Nichtgebrauch in eine Position absenkbar ist, in welcher er nicht mit dem auf dem Auflagetisch (2) aufliegenden Fahrzeugreifen in Kontakt steht.

## Claims

1. Method for aligning and setting upright a vehicle tyre in the course of the automated introduction of a component into the vehicle tyre, in which the vehicle tyre is provided in lying horizontal alignment on a supporting table (2) with movable rollers (20), is subsequently tilted into an upright position and then the component is applied to the inner side of the tyre,
**characterized in that** the vehicle tyre provided on the supporting table (2) is clamped in the region of its outer circumference between clamping jaws (3, 3') lying diametrically opposite in relation to the vehicle tyre and movable with respect to one another and is centred, wherein each clamping jaw (3, 3') comprises two rotatably mounted clamping rollers (30, 31, 30', 31'), which are spaced apart from one another, are placed against the circumference of the vehicle tyre and have in each case a rotary encoder for ascertaining the rotational speed and/or rotational position of the respective clamping roller (30, 31, 30', 31') and wherein one clamping roller (30, 30') of each clamping jaw (3, 3') is rotationally driven in order to make the vehicle tyre rotate and the other clamping roller (31, 31') rotates freely, wherein the rotational speeds of the clamping rollers (30, 31, 30', 31') are compared and, when deviations occur, a readjustment of the rotational speed of the rotationally driven clamping rollers (30, 30') is brought about and then the clamping jaws (3, 3') are tilted together with the supporting table (2) and the clamped vehicle tyre into the upright position and subsequently the component is applied.

2. Method according to Claim 1, **characterized in that** the angular position of the vehicle tyre clamped between the clamping jaws (3, 3') is detected and the vehicle tyre is rotated into a defined predetermined angular position between the clamping jaws (3, 3') before the application of the component.

3. Method according to Claim 2, **characterized in that** the angular position is ascertained by means of an image recognition and image processing system on the basis of at least one marking on the vehicle tyre and a correction value for rotating the vehicle tyre into the defined angular position is calculated and the rotationally driven clamping rollers (30, 30') are activated correspondingly.

4. Method according to either of Claims 2 and 3, **characterized in that** the rotating of the vehicle tyre into the defined angular position is brought about during the tilting of the clamping jaws (3, 3') and the supporting table (2) with the vehicle tyre into the upright position.

5. Method according to one of Claims 1 to 4, **characterized in that** a clamping plate running parallel to the supporting table (2) and having movable rollers is placed onto the upper side of the vehicle tyre before the tilting into the upright position and is tilted into the upright position together with the supporting table (2) and with the vehicle tyre in between.

6. Method according to one of Claims 1 to 5, **characterized in that**, after application of the component, the vehicle tyre is returned to the horizontal alignment together with the supporting table (2) and the clamping jaws (3, 3'), the clamping jaws (3, 3') are opened and the vehicle tyre is conveyed away from the supporting table (2).

7. Method according to one of Claims 1 to 6, **characterized in that** a foam strip or a sensor is applied as the component.

8. Device for carrying out the method according to one of Claims 1 to 7, comprising a supporting table for the vehicle tyre, which is provided with movable rollers (20), and comprising clamping jaws (3, 3') for the vehicle tyre, which are arranged on two opposite sides of the supporting table and are movable with respect to one another and which have in each case two clamping rollers (30, 31, 30', 31'), which are arranged parallel to one another and spaced apart from one another and can be placed against the circumference of a vehicle tyre located on the supporting table (2) in horizontal alignment, wherein in each case one clamping roller (30, 30') of the clamping jaws (3, 3') has a rotary drive (32, 32') and the other clamping roller (31, 31') is mounted freely rotatably and all of the clamping rollers (30, 31, 30', 31') are equipped with a rotary encoder for ascertaining the rotational speed and/or rotational position of the clamping rollers (30, 31, 30', 31'), wherein furthermore a control device is provided for comparing the rotational speeds of the clamping rollers (30, 31, 30', 31'), by means of which the rotational speed of the driven clamping rollers (30, 30') can be adjusted when differences in speed occur, and the clamping jaws (3, 3') can be tilted into an upright position together with the supporting table (2) and the clamped vehicle tyre.

9. Device according to Claim 8, **characterized in that** a detecting device is provided, which is intended for detecting the angular position of a vehicle tyre clamped on the supporting table (2) between the clamping jaws (3, 3') and by means of which control commands for rotating the vehicle tyre into a defined predeterminable angular position can be generated.

10. Device according to either of Claims 8 and 9, **characterized in that** the movable rollers (20) of the supporting table (2) are formed as omnidirectional rollers.

11. Device according to one of Claims 8 to 10, **characterized in that** a clamping plate is provided, which has movable rollers and can be placed onto the upper side of the vehicle tyre lying on the supporting table (2) and can be tilted together with it into the upright position.

12. Device according to Claim 11, **characterized in that** the movable rollers of the clamping plate are formed as omnidirectional rollers.

13. Device according to one of Claims 8 to 12, **characterized in that** the supporting table (2) is provided with a feeding unit (1) and a discharging unit (4) for feeding and discharging a vehicle tyre to and from the supporting table (2) in lying horizontal alignment.

14. Device according to Claim 13, **characterized in that** the feeding unit (1) and the discharging unit (4) comprise in each case a belt conveyor (10, 40), which when not in use can be lowered into a position in which it is not in contact with the vehicle tyre lying on the supporting table (2).

## Revendications

1. Procédé d'alignement et de redressement d'un pneu de véhicule dans le cadre de l'introduction automatisée d'un composant dans le pneu de véhicule, dans lequel le pneu de véhicule est mis à disposition en orientation horizontale couchée sur une table de support (2) comprenant des galets mobiles (20), puis basculé dans une position verticale et le composant est ensuite appliqué sur le côté intérieur du pneu,
**caractérisé en ce que** le pneu de véhicule mis à disposition sur la table de support (2) est serré et centré dans la zone de sa circonférence extérieure entre des mâchoires de serrage (3, 3') diamétralement opposées par rapport au pneu de véhicule et déplaçables l'une par rapport à l'autre, chaque mâchoire de serrage (3, 3') comportant deux galets tendeurs (30, 31, 30', 31') montés rotatifs à distance l'un de l'autre, qui sont appliqués contre la circonférence du pneu de véhicule et qui présentent chacun un capteur de rotation pour déterminer la vitesse de rotation et/ou la position de rotation du galet tendeur respectif (30, 31, 30', 31'), et un galet tendeur (30, 30') de chaque mâchoire de serrage (3, 3') étant entraîné en rotation pour faire tourner le pneu de véhicule et l'autre galet tendeur (31, 31') tournant librement, les vitesses de rotation des galets tendeurs (30, 31, 30', 31') étant comparées et, en cas d'écarts, un réajustement de la vitesse de rotation des galets tendeurs entraînés en rotation (30, 30') étant effectué, puis les mâchoires de serrage (3, 3') étant basculées dans la position verticale conjointement avec la table de support (2) et le pneu de véhicule serré, et le composant étant ensuite appliqué.

2. Procédé selon la revendication 1, **caractérisé en ce que** la position angulaire du pneu de véhicule serré entre les mâchoires de serrage (3, 3') est détectée et le pneu de véhicule est tourné entre les mâchoires de serrage (3, 3') dans une position angulaire prédéterminée définie avant l'application du composant.

3. Procédé selon la revendication 2, **caractérisé en ce que** la position angulaire est déterminée au moyen d'un système de reconnaissance et de traitement d'images à l'aide d'au moins un marquage sur le pneu de véhicule, et une valeur de correction est calculée pour faire tourner le pneu de véhicule dans la position angulaire définie et les galets tendeurs entraînés en rotation (30, 30') sont commandés en conséquence.

4. Procédé selon l'une quelconque des revendications 2 ou 3, **caractérisé en ce que** la rotation du pneu de véhicule dans la position angulaire définie est effectuée pendant le basculement des mâchoires de serrage (3, 3') et de la table de support (2) avec le pneu de véhicule dans la position verticale.

5. Procédé selon l'une quelconque des revendications 1 à 4, **caractérisé en ce qu'avant** le basculement dans la position verticale, une plaque de serrage comprenant des galets mobiles, parallèle à la table de support (2), est placée du côté supérieur sur le pneu de véhicule et basculée dans la position verticale conjointement avec la table de support (2), le pneu de véhicule étant intercalé.

6. Procédé selon l'une quelconque des revendications 1 à 5, **caractérisé en ce qu'**après l'application du composant, le pneu de véhicule est ramené dans l'orientation horizontale conjointement avec la table de support (2) et les mâchoires de serrage (3, 3'), les mâchoires de serrage (3, 3') sont ouvertes et le pneu de véhicule est retiré de la table de support (2).

7. Procédé selon l'une quelconque des revendications 1 à 6, **caractérisé en ce qu'**une bande de mousse ou un capteur est appliqué en tant que composant.

8. Dispositif pour la réalisation du procédé selon l'une quelconque des revendications 1 à 7, comprenant une table de support pourvue de galets mobiles (20) pour le pneu de véhicule et des mâchoires de serrage (3, 3') pour le pneu de véhicule, agencées sur deux côtés opposés de la table de support et déplaçables l'une par rapport à l'autre, qui présentent chacune deux galets tendeurs (30, 31, 30', 31') agencés parallèlement l'un à l'autre et à distance l'un de l'autre, qui peuvent être appliqués contre la circonférence d'un pneu de véhicule se trouvant sur la table de support (2) en orientation horizontale, un galet tendeur (30, 30') des mâchoires de serrage (3, 3') présentant respectivement un entraînement en rotation (32, 32') et l'autre galet tendeur (31, 31') étant monté de manière librement rotative, et tous les galets tendeurs (30, 31, 30', 31') étant équipés d'un capteur de rotation pour déterminer la vitesse de rotation et/ou la position de rotation des galets tendeurs (30, 31, 30', 31'), un dispositif de commande étant en outre prévu pour comparer les vitesses de rotation des galets tendeurs (30, 31, 30', 31'), au moyen duquel, en cas de différences de vitesse de rotation, la vitesse de rotation des galets tendeurs entraînés (30, 30') peut être ajustée, et les mâchoires de serrage (3, 3') peuvent être basculées dans une position verticale conjointement avec la table de support (2) et le pneu de véhicule serré.

9. Dispositif selon la revendication 8, **caractérisé en ce qu'un** dispositif de détection pour détecter la position angulaire d'un pneu de véhicule serré sur la table de support (2) entre les mâchoires de serrage (3, 3') est prévu, au moyen duquel des instructions de commande peuvent être produites pour faire tourner le pneu de véhicule dans une position angulaire prédéterminable définie.

10. Dispositif selon l'une quelconque des revendications 8 ou 9, **caractérisé en ce que** les galets mobiles (20) de la table de support (2) sont configurés en tant que galets omnidirectionnels.

11. Dispositif selon l'une quelconque des revendications 8 à 10, **caractérisé en ce qu'**une plaque de serrage comprenant des galets mobiles est prévue, qui peut être placée du côté supérieur sur le pneu de véhicule reposant sur la table de support (2) et qui peut être basculée conjointement avec celui-ci dans la position verticale.

12. Dispositif selon la revendication 11, **caractérisé en ce que** les galets mobiles de la plaque de serrage sont configurés en tant que galets omnidirectionnels.

13. Dispositif selon l'une quelconque des revendications 8 à 12, **caractérisé en ce que** la table de support (2) est pourvue d'une unité d'alimentation (1) et d'une unité de déchargement (4) pour l'alimentation et le déchargement d'un pneu de véhicule vers et depuis la table de support (2) dans une orientation horizontale couchée.

14. Dispositif selon la revendication 13, **caractérisé en ce que** l'unité d'alimentation (1) et l'unité de déchargement (4) comprennent chacune un transporteur à bande (10, 40) qui, lorsqu'il n'est pas utilisé, peut être abaissé dans une position dans laquelle il n'est pas en contact avec le pneu de véhicule reposant sur la table de support (2).
